# EUROPEAN PATENT SPECIFICATION

(11) **EP 3 368 830 B1**
(45) Date of publication and mention of the grant of the patent: **16.10.2019**
(21) Application number: 16836060.0
(22) Date of filing: 28.10.2016
(51) Int. Cl.: F24D 3/00, F24H 4/04, H02J 3/00

(54) **ELECTRONIC CONTROL UNIT FOR PLANT SYSTEM MANAGEMENT**
ELEKTRONISCHE STEUEREINHEIT FÜR ANLAGENSYSTEMVERWALTUNG
UNITÉ DE COMMANDE ÉLECTRONIQUE POUR GESTION DE SYSTÈME DE CENTRALE ÉLECTRIQUE

(30) Priority: 30.10.2015 IT UB20155000
(43) Date of publication of application: 05.09.2018
(73) Proprietor: Edilvi SPA, 31020 Villorba (TV) (IT)
(72) Inventor: PAVAN, Diego, 31020 Villorba (TV) (IT); ZAGO, Alessandro, 31020 Villorba (TV) (IT)
(86) International application number: PCT/IT2016/000260
(87) International publication number: WO 2017/103955

(56) References cited:
- EP-A1- 2 908 072
- GB-A- 2 448 896
- GB-A- 2 514 128
- US-A1- 2012 153 725

## Description

The present invention pertains to the control systems sector and it has for object an electronic control unit for plant system management composed of:
- a heat pump inverter;
- a solar photovoltaic system connected to the national grid (grid connected);
- a thermal storage;

There is no distinction between the type of each of the above components. Therefore, the invention is applicable, for example and not exclusively, to:
- Compression cycle heat pumps with electric motor type air/water, water/water, air/air, etc.
- Solar photovoltaic plants made of polycrystalline silicon, monocrystalline, amorphous silicon, etc.;
- Sensible heat buildup (hydronic) or latent heat (PCM, Phase Change Materials), buffer tanks or thermal flywheels, storage heaters, buffers, etc.

The electronic control unit can be integrated in the machine inside the heat pump, or it can communicate thanks to a specific protocol (Modbus, radio frequency, etc.) with the temperature control unit that governs the heat pump operation.

### State of the art

According to technical note, the adjustment of a heat pump is managed in this way:
a) in monovalent systems, the heat pump is sized to independently support the entire thermal-refrigerator load of the building; ignitions are controlled in function of temperature signals produced by probs that are in the thermal storage served by the machine, with flow temperature depending on the outside temperature (weather compensation of the set point or dynamic compensation of the set point);
b) in bivalent systems with alternating operation, the heat pump is activated when the outside temperature is greater than a predetermined limit value (dual mode temperature), always working to keep the temperatures set-point on the thermal storage. Below the dual mode temperature, the supplementary system is activated (for example Boiler);
c) in bivalent systems with parallel operation, the heat pump works simultaneously with the supplementary system in a temperature range between the cut-off temperature and the bivalent temperature; above the dual mode temperature, the heat pump works alone; below the cut-off temperature, the integrative system works alone.

At the state of the art these operation modes present the following incompleteness:
- The design choice a) forces to oversize the heat pump size, with high absorption of electrical energy when weather is cold and with strong degrees of capacity in operation at partial loads;
- The design choices b) and c) involve the implementation of a hybrid system, raising the initial investment costs in order to reduce the operating costs of management, and forcing to maintain a dual source of energy (electricity and fuel).

The possible presence of a photovoltaic plant in a building where a heat pump in installed does not change the previous logic. More generally:
a) if there is not an electrochemical storage system, the instantaneous availability of electrical energy from photovoltaic sources is exploited to decrease or satisfy the entire electrical load required from the building, and the production surpluses are credited to the national grid through the bidirectional counter;
b) if there is an electrochemical storage system, any photovoltaic production surpluses are stored in special batteries, from which electricity can be taken out when needed, even if there is no instant availability of energy from photovoltaic sources.

However, both solutions have limitations:
a) the first option does not allow to fully exploit the availability of free electricity produced from renewable sources;
b) the second option raises the rates of consumption, but:
   - At this time it presents high investment costs;
   - The duration of the batteries is low: from 3 to 10 years, depending on the type;
   - Not all the stored electrical energy can be reused, because the percentage of charging / discharging stood in the range from 50% to 80%, depending on the type;
   - Disposal of batteries is an environmental issue.

In order to overcome the diachrony between the moments of electricity production from renewable sources (solar) and the moments of energy required by the building, the present invention allows to transform the electric energy produced by the photovoltaic instantly in heating or cooling energy thanks to the heat pump and storing it in one or more of the thermal type accumulations, solving the problems of point b).

Also, it allows to prefer design solutions with monovalent heat pumps that contain investment costs, using a single energy vector (absence of fossil fuels) and contextually ensuring the heat requirement of the building coverage and refrigerators.

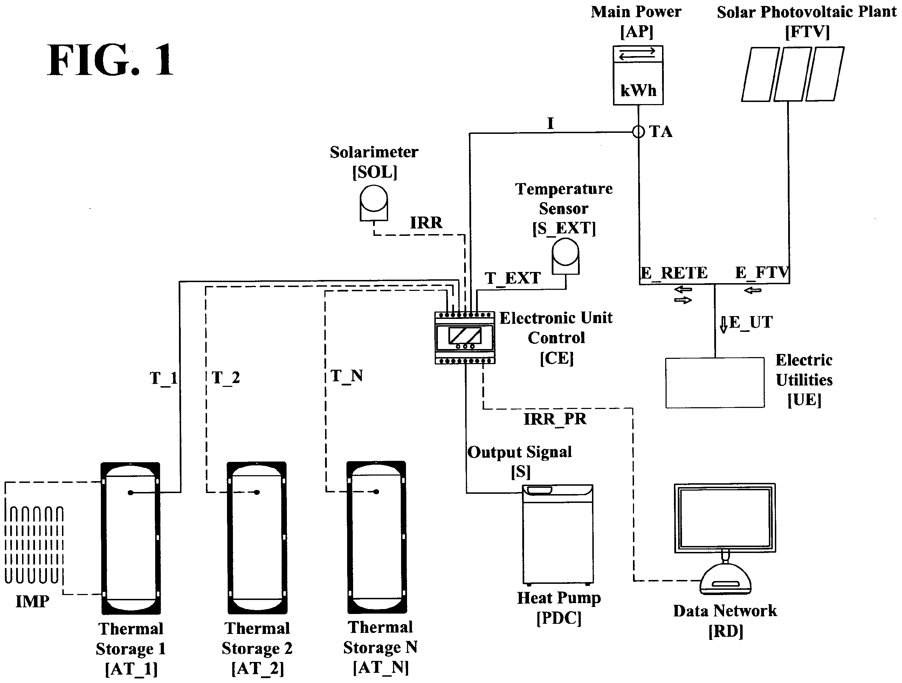

*The code nomenclature that will be used within parentheses identifies system components and physical parameters explained in the accompanying drawing (Table 1*/*1).*

The electronic control unit (CE) invented receives the following input signals:
- Intensity and direction of the electric current (I) in transit along the power line downstream of the down counter constituting the main power (AP) of the building, and forming the building's electrical system interface with the national electricity network;
- Temperature (T_1, T_2, ..., T_N) of one or more thermal storage (AT_1, AT_2, ..., AT_N) that are present in the thermomechanical plant for the building service.

NOTE: If the plant is made up of several thermal storages, the abbreviation AT_1 means the thermal storage that has priority of maintaining the set-point, AT_N the least priority, and other acronyms tanks intermediate priorities;
- Outside temperature (T_EXT).

The measurement of these physical quantities respectively takes place through:
- An amperometric transformer (TA) installed before the down counter (AP) and behind the power supply lines of the building's electrical loads (UE);
- One or more temperature sensors (for example PTC thermistors or NTC thermistors with inclusion in cockpit in the accumulation);
- A temperature sensor for outdoor installation (S_EXT).

The programmable processor of the electronic control unit (EC) processes the input signals with the following logic:

### a) Daily operation.

The instant absorption by the electric utilities of the building (E_UT) is greater than the availability of electricity from photovoltaic sources (E_FTV), therefore there is a flow of electrical energy (E_RETE) coming from the national power grid and directed toward the load (UE) to compensate for the totality of the electrical load demand.

In this case, the current (I) passing along the line downstream of the counter (AP) has module > 0 and towards incoming from the national grid to the building's electrical system.

The electronic control unit (CE) processes this input signal (I), together with those of outside temperature (T_EXT) and of temperature in thermal accumulation (T_1, T_2, ..., T_N).

Depending on the difference between the temperature T_1 detected in the priority accumulation AT_1 and its temperature set-point (T_SET_1), a signal (S) is produced in output, with proportional logic (P), proportional-integrative (PI) or proportional-integrative-derivative (PID).

The signal (S) imposes a number of revolutions to the heat pump unit inverter motor-compressor (PDC), that modulates the heating or cooling power delivered by the machine. The outlet water temperature value is established according to the climatic compensation mechanism, in T_EXT function.

Once T_1 coincides with the T_SET_1 value, the control passes to thermal storage with secondary priority (AT 2): in this case the machine (PDC) works so that T_2 is carried forward to the T_SET_2 value. The checks continue to control heat accumulation with less priority (AT_N).

### b) The surplus of production management from photovoltaic system.

The instant absorption by the electric utilities of the building (E_UT) is less than the availability of electricity from photovoltaic sources (E_FTV), so there is a flow of electrical energy (E_RETE) directed towards the national grid (energy surplus produced by the solar photovoltaic).

In this case, the current (I) in transit along the line downstream of the meter (AP) has module > 0 and outgoing direction from the electrical system of the building to the national grid. The electronic control unit (CE) processes this input signal (I), produces an output signal (S) which imposes a growth ramp to the number of turns of the heat pump inverter motor-compressor unit (PDC) and simultaneously change the value of set-point temperature in the thermal accumulation (AT_1, AT_2, ..., AT_N) with the following methods:
- If the accumulation of water is heated (for example domestic hot water or heating system), the set-point of the accumulation is raised from T_SET to T_max, where T_SET is the nominal value and T_max is the upper range limit of the working temperature of the heat pump (PDC);
- If the accumulation is of chilled water (for example cooling system), the set-point of the accumulation is lowered from T_SET to T_MIN, where T_SET is the nominal value and T_MIN is the lower range limit of the working temperature of the heat pump (PDC).

The imposition of the growth ramp:
- By inverter it increases the machine's working frequency (PDC), impressing a maximum acceleration to the motor-compressor unit, established on the basis of the torque limit deliverable by the electric motor and the need to limit the amount of oil entrained in the refrigerant circuit during transients;
- It requires that the flow temperature of the heat pump (PDC) disregards from T_EXT value (disruption of weather compensation) and attests to T_max or T_MIN value depending on the heat tank on which the machine (PDC) is working;
- It persists as long as the direction of the current (I) is outgoing towards the national electricity grid and its module does not tend to zero; from that moment, the set-point of thermal accumulation returns to the rated value T_SET and water delivery temperature produced by the heat pump returns to be a function of the outside temperature (T_EXT) according to the curve weather compensation set on the machine;
- If values of change set-point were already reached (T_max and / or T_MIN) in heat build-up and the current module (I) remains to a non-zero value, the output signal (S) is cancelled and any additional surplus of energy produced from photovoltaic sources are introduced into the national grid.

In order to prevent short and sudden load changes (E_UT) which cause phenomena of oscillation and untimely start of the machine (PDC), the output signal (S) is produced with a predetermined delay (DT) on the electronic control unit (CE) compared the reading of the input signal (I).

For example, this invention can be applied in medium-small size residential buildings with photovoltaic solar plants, where the electric power generated by the modules frequently exceed the basic electric load of the building (usage profile and occupation of the building opposite to the photovoltaic plant output curve). In this case, the frequent occurrences of surplus electricity generated by the photovoltaic system can be exploited for the user: the electronic control unit (CE) goes to vary the instantaneous electrical load required from the house, adjusting it to the instant energy production of the solar photovoltaic.

An electronic control unit (CE) as previously described and provided with a data input (for example ethernet port) communicating with a data network (RD) from which you can receive the meteorological forecast data for the next day in the chosen locations is also object of the present invention. The processing of data occurs in this way:
- Comparison between the expected solar irradiation (IRR_PR) and the minimum solar irradiance (in IRR_MIN), where the IRR_MIN value is obtained from the data network, and the IRR_MIN value is derived statistically from the data recorded by a pyranometer (SOL) and communicated to the electronic control unit (CE): it represents the average value of radiation (IRR) that in previous days produced an outgoing verse current (I) from the electrical system of the building to the national grid, that is the value of radiation that generates a surplus of electricity production (E_FTV> E_UT);
- If the expected value of solar irradiation (IRR_PR) is less than the set minimum value (IRR_MIN), the electronic control unit (CE) produces an output signal (S) which controls the starting of the heat pump (PDC) during the night, so it charges the thermal accumulation (AT_1, AT_2, ..., AT_N) in correspondence of lower electricity prices of the national network (multi-hour rates);
- If the solar irradiation value expected (IRR_PR) is greater than the set minimum value (IRR_MIN), nothing is produced in output because it is expected that for the next day availability of energy from photovoltaic sources in daytime session will be sufficient to generate a surplus of energy that will power the heat pump (PDC).

It is also part of the present invention an electronic control unit (CE) as previously described and equipped with the following feature: if the values of the modified set-point (T_max and / or T_MIN) are already achieved in the thermal storage and the module of the current (I) does not reset and remain in the outgoing direction to the national grid, the output signal (S), rather than reset as described, controls the activation of the emission system terminals (IMP), beginning to download the respective thermal storage and offering the possibility to the heat pump (PDC) to be able to produce more energy to be stored. In this way, the heat storage capacity is extended from the heat transfer fluid in the reservoir to the same structures that compose the building casing. The architecture of this process allows to expand the storage capacity and to further reduce the occurrence of export to the national grid of an energy flow produced by the solar photovoltaic or, in other words, to maximize the consumption of building.

## Claims

1. Electronic control unit for the management of a plant system, adapted to
- receive temperature signals from thermal storage probes;
- receive temperature signals from external probes;
- receive the electric current intensity and direction signal in transit along the power line, downstream the bidirectional meter and upstream the power line supplying the building's electrical loads:
- produces an output signal for the heat pump control and or for the building terminal units control, in function of the mentioned input signals;
- operates according to the following logic: it gives a ramps growth to the rotations of the compression group motor of the inverter heat pump and at the same time modifies the set- point values of the thermal storage in the event that there is an energy surplus produced by the solar photovoltaic system as compared to the power consumption related to the instantaneous electrical load of the building;

2. Electronic control unit according to claim 1), **characterized in that** it is adapted to
- receive irradiance signals from a solarimeter;
- and/or receive meteo data from a data network;

3. Electronic control unit according to the preceding claims, **characterized in that** it is adapted to activate the heat pump in the night phase in the case in which the weather forecast data received from the data network states that for the following day the amount of energy available from a photovoltaic source will not be sufficient to generate a surplus of energy that can be able to power the heat pump;

4. Electronic control unit according to the preceding claims **characterized in that** the terminal units can be activated in the event that the modified set-point values are already archived into the thermal storages and the measured current intensity is not zero and its direction remains outgoing to the national power grid;

5. Plant in which is installed the electronic control unit according to anyone of the preceding claims, composed of:
- at least one solar photovoltaic system of any kind;
- at least one inverter heat pump of any kind;
- one or more thermal storages of any kind; and the energy surplus produced by the solar photovoltaic system is converted in thermal energy that is stored in suitable tanks.

## Patentansprüche

1. Elektronische Steuereinheit für die Verwaltung eines Anlagesystems, das dazu geeignet Ist, Temperatursignale von Speichertemperatursensoren aufzunehmen;
- Temperatursignale von externen Sensoren aufzunehmen;
- die elektrische Stromstärke und das Richtungssignal entlang der Stromleitung aufzunehmen, den bidirektionalen Zähler nachzulagern sowie die Stromleitung vorzulagern, die die elektrischen Verbraucher des Gebäudes versorgt:
- ein Ausgangssignal für die Wärmepumpensteuerung und/oder für die Gebäudesteuereinheiten in Abhängigkeit mit den erwähnten Eingangssignalen zu erzeugen;
- nach folgender Logik zu arbeiten: sie beschleunigt die Drehungen des Kompressionsmotors der Inverter-Wärmepumpe und ändert gleichzeitig die Sollwerte des thermischen Speichers falls ein Energieüberschuss auftreten sollte, der von der Photovoltaikanlage erzeugt wird, verglichen mit dem Stromverbrauch, der sich auf die momentante elektrische Last des Gebäudes bezieht;

2. Elektronische Steuereinheit nach Anspruch 1), **dadurch gekennzeichnet, dass** sie dazu geeignet ist, Bestrahlungssignale von einem Solarimeter zu empfangen;
- und/oder meteorologische Daten von einem Datennetz zu empfangen;

3. Elektronische Steuereinheit nach den vorhergehenden Ansprüchen, **dadurch gekennzeichnet, dass** sie dazu geeignet Ist, die Wärmepumpe während der Nachtphase einzuschalten im Falle, dass die vom Datennetzwerk empfangenen Wettervorhersagedaten feststellen, dass die Energiemenge einer Photovoltaikquelle für den nächsten Tag nicht ausreichen wird, um eine überschüssige Energie zu erzeugen, die in der Lage ist, die Wärmepumpe zu versorgen;

4. Elektronische Steuereinheit nach den vorhergehenden Ansprüchen, **dadurch gekennzeichnet, dass** die Endgeräte aktiviert werden können, wenn die geänderten Sollwerte schon im thermischen Speicher archiviert sind, die gemessene Stromstärke nicht Null beträgt und vom nationalen Stromnetz kommt;

5. Die Anlage, wo die elektronische Steuereinheit eingebaut ist nach einem der vorhergehenden Ansprüche, setzt sich zusammen aus:
- mindestens einer Photovoltalkanlage jeder Art;
- mindestens einer Inverter-Wärmepumpe jeder Art;
- elnem oder mehreren thermischen Speichern jeder Art; und der von der Photovoltaikanlage erzeugte Energieüberschuss wird in thermische Energie umgewandelt, die in geeigneten Tanks gespeichert wird.

## Revendications

1. Unité de commande électronique pour la gestion d'un système d'installation, adaptée pour recevoir les signaux de température provenant des sondes de stockage thermique ;
- elle reçoit les signaux de température provenant des sondes externes ;
- elle reçoit le signal d'intensité et de direction du courant électrique en transit le long de la ligne électrique, en aval du compteur bidirectionnel et en amont de la ligne électrique alimentant les charges électriques du bâtiment :
- elle produit un signal de sortie pour la commande de pompe à chaleur et/ou pour la commande d'unités terminales de bâtiment, en fonction des signaux d'entrée mentionnés ;
- elle fonctionne selon la logique suivante ; elle donne une augmentation aux rotations du moteur du groupe de compression de la pompe à chaleur à inverseur et modifie en même temps les valeurs de consigne du stockage thermique dans le cas où il y a un surplus d'énergie produit par le système photovoltaïque solaire par rapport à la consommation électrique liée à la charge électrique instantanée du bâtiment ;

2. Unité de commande électronique selon la déclaration 1), **caractérisée en ce qu'**elle est adaptée pour recevoir des signaux d'éclairement énergétique provenant d'un solarimètre ;
- et/ou à recevoir des données météorologiques d'un réseau de données ;

3. Unité de commande électronique selon les déclarations précédentes, **caractérisée en ce qu'**elle est adaptée pour activer la pompe à chaleur dans la nuit, dans le cas où les données de prévision météorologique reçues du réseau de données indiquent que, pour le lendemain, la quantité d'énergie disponible provenant d'une source photovoltaïque ne suffira pas à générer un surplus d'énergie pouvant alimenter la pompe à chaleur ;

4. Unité de commande électronique selon les déclarations précédentes, **caractérisée en ce que** les unités terminales peuvent être activées dans le cas où les valeurs de consigne modifiées sont déjà archivées dans les stockages thermiques et que l'intensité du courant mesurée n'est pas nulle et que sa direction reste sortante pour le réseau électrique national ;

5. Installation dans laquelle est installée l'unité de commande électronique selon l'une quelconque des déclarations précédentes, composée de :
- au moins un système photovoltaïque solaire de tout type ;
- au moins une pompe à chaleur à inverseur de tout type ;
- un ou plusieurs stockages thermiques de tout type ; et le surplus d'énergie produit par le système photovoltaïque solaire est converti en énergie thermique qui est stockée dans des réservoirs appropriés.
